# EUROPÄISCHE PATENTANMELDUNG

(11) **EP 0 625 819 A1**
(43) Veröffentlichungstag der Anmeldung: **23.11.1994**
(21) Anmeldenummer: 93108166.5
(22) Anmeldetag: 19.05.1993
(51) Int. Cl.: H02K 19/10, H02K 19/06, H02K 1/24

(54) **Reluktanzmotor, insbesondere zum Antrieb eines Waschautomaten**

(71) Anmelder: SIEMENS AKTIENGESELLSCHAFT, D-80333 München (DE)
(72) Erfinder: Klein, Hans-Wilhelm, Dipl.-Ing., W-97078 Würzburg (DE); Döblinger, Rüdiger Dipl.-Ing., W-87348 Rödelsee (DE); Steinhorn, Axel, Dipl.-Ing., W-97957 Wittighausen (DE); Tiemeyer, Peter Dipl.-Ing., w-97074 Würzburg (DE)

(57) **Zusammenfassung**

Zur Minderung des Betriebsgeräusches eines Reluktanzmotors mit über den Rotorumfang unter Bildung von Ausspannungen (5) mit erhöhter Reluktanz verteilten Rotorpolen (2.1) mit geringerer Reluktanz sind die Aussparungen (5) zumindest rotorumfangseitig mit einer Ausfüllung (2.11;3.1,3.2) mit im Sinne einer eine Geräuschbildung durch Turbulenzen verhindernden glatten Umfangsoberfläche und mit im Sinne einer eine Geräuschbildung durch Magnetostriktion bzw. Momentenpulsation verhindernden magnetischen Leitfähigkeit bei betriebsmäßig relativ zum Stator (1) drehendem Rotor vorgesehen.

## Beschreibung

Die Erfindung bezieht sich auf einen Reluktanzmotor, insbesondere zum Antrieb eines Waschautomaten, gemäß Oberbegriff des Anspruchs 1; ein derartiger Reluktanzmotor ist z.B. durch den Aufsatz "Geschalteter Reluktanzmotor als robuste Alternative" aus der Zeitschrift ELEKTRONIK 26/1992, Seiten 72-75 bekannt.

Der vorgenannte bekannte, z.B. auch zum Einsatz als Schleudermotor für eine Waschmaschine vorgesehene, Reluktanzmotor besteht üblicherweises aus einem lamellierten Statorpaket mit über den Umfang verteilten Statorpolen mit zugeordneten Erregerspulen und einem unbewickelten Rotorpaket mit über den Umfang verteilten Rotorpolen und dazwischen verbleibenden Aussparungen, derart daß Zonen erhöhter bzw. verminderter Reluktanz zwischen dem Rotor einerseits und dem Stator andererseits entstehen. Betrachtet man den Verlauf des magnetischen Flußes zwischen Stator und Rotor als Funktion des Stromes und der Rotorlage, so kann man zwischen Bereichen keiner Überlappung der Pole von Rotor bzw. Stator, zunehmender Überlappung der Pole, ganzer Überlappung der Pole und abnehmender Überlappung der Pole unterscheiden. Durch Weiterschaltung der Wicklungsbestromung der Erregerwicklungen der Statorpole und gegebenenfalls durch Taktung mit Pulsbreitenmodulation kann eine Drehzahlsteuerung und ein Drehmomentenverhalten erreicht werden, das trotz wesentlich einfacherer Ausführung des Motors mit anderen drehzahlveränderbaren Antrieben, wie z.B. Kommutatormotoren bzw. stromrichtergespeisten Induktionsmotoren, vergleichbar ist.

Aufgabe vorliegender Erfindung ist es, gegenüber bekannten vergleichbaren Kommutatormotoren bzw. umrichtergeregelten Induktionsmotoren bei geringerem Motorgewicht und Fertigungsaufwand auch bei hoher Drehzahlspreizung, insbesondere bei für Waschautomaten-Antriebe vorteilhaft hoher Schleuderdrehzahl, die Betriebsgeräusche niedrig halten zu können.

Die Lösung dieser Aufgabe gelingt bei einem Motor der eingangs genannten Art durch die Lehre des Anspruchs 1; vorteilhafte Ausgestaltungen der Erfindung sind jeweils Gegenstand der Unteransprüche.

Durch die erfindungsgemäß vorgesehenen Ausfüllungen werden einerseits, insbesondere bei höheren Rotationsgeschwindigkeiten, ansonsten auftretende Geräusche durch Wirbelbildung im umgebenden Medium zwischen den Statorpolen einerseits und den Rotorpolen andererseits als auch eine Geräuschbildung durch Magnetostriktion bzw. Momentenpulsation beim ansonsten plötzlichen Eintreten der Rotorpole in die Bereiche des statorpolseitigen Flusses vermieden. Selbstverständlich ist bei der Dimensionierung der "magnetisch weichen" Übergange zwischen den benachbarten Rotorpolen darauf zu achten, daß ein magnetischer Kurzschluß und damit eine wesentliche Minderung des leistungsbestimmenden Drehmomentes vermieden wird; dazu können entsprechende Dimensionierungen der Ausfüllungen, jedoch auch gezielte magnetische Engpässe in den die benachbarte Rotorpole verbindenden Ausfüllungen vorgesehen sein.

Nach einer ersten Ausgestaltung der Erfindung sind Kunststoff-Ausfüllungen mit einer Beimischung aus magnetischleitendem Material vorgesehen, wobei diese Ausfüllungen entweder als Blöcke zwischen die Rotorpole eingesetzt oder bei fertig paktetierten Rotorblechpaketen auch eingespritzt sein können.

In fertigungstechnisch besonders einfacher Weise ist nach einer weiteren Ausgestaltung der Erfindung vorgesehen, als Ausfüllungen randseitig an die Lamellen des Rotorpaketes mitangestanzte Lamellenstege vorzusehen, die einstückig in die Polspitzen der Rotorpole übergehen und durch ihre Dimensionierung bzw. durch eingestanzte Lücken magnetische Engpässe derart bilden, daß ein drehmomentmindernder magnetischer Kurzschluß zwischen den benachbarten, verschiedener Polarität zugehörigen Rotorpolen vermieden wird.

Die Erfindung sowie weitere vorteilhafte Ausgestaltungen der Erfindung werden im folgenden anhand schematisch dargestellter Ausführungsbeispiele in der Zeichnung näher erläutert; darin zeigen
- FIG 1: in einem radialen Querschnitt den schematischen Aufbau eines üblichen Reluktanzmotors mit zwischen den Rotorpolen betriebsbedingten Lücken,
- FIG 2: eine erste Ausführung eines erfindungsgemäßen Rotors eines Reluktanzmotors,
- FIG 3: eine zweite Ausführung eines erfindungsgemäßen Rotors für einen Reluktanzmotor,
- FIG 4: eine dritte Ausführung eines erfindungsgemäßen Rotors für eine Reluktanzmotor.

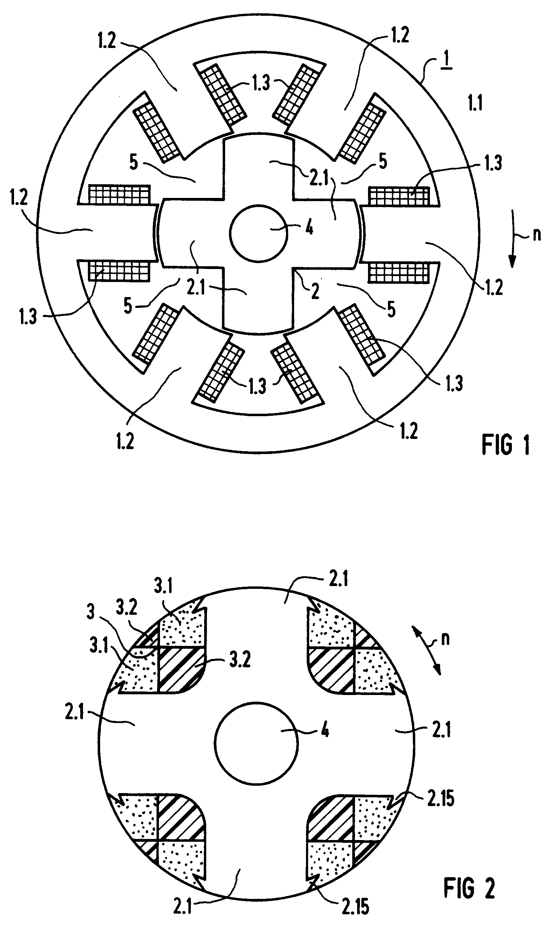

FIG 1 zeigt in radialem Querschnitt einen Reluktanzmotor mit einem lamellierten Statorblechpaket 1 und einem von einer Rotorwelle 4 gehaltenen lamellierten Rotorblechpaket 2. Die dargestellte Stator-Ausführung betrifft einen dreisträngigen Motor mit einem Statorjoch 1.1 und mit pro Strang jeweils zwei einander diametral gegenüberliegenden Statorpolen 1.2 mit jeweils einer zugeordneten Erregerwicklung 1.3.

Das dargestellte Rotorblechpaket 2 betrifft eine Ausführung mit vier ausgeprägten Rotorpolen 2.1 und dazwischenliegenden Ausspannungen 5. Bei der dargestellten Zuordnung der Statorpole 1.2 einerseits zu den Rotorpolen 2.1 andererseits befinden sich die waagrechten Rotorpole 2.1 in Bereichen ganzer Überlappung und die senkrechten Rotorpole mit ihrer einen Polspitze - je nach Drehrichtung n - in einem Bereich zunehmender Überlappung und mit ihrer anderen Polspitze in einem Bereich abnehmender Überlappung.

In der Fachliteratur wird insbesondere für den Fall daß Reluktanzmotore als Schrittmotor eingesetzt bzw. angesteuert werden für einen stator- bzw. rotorseitigen Pol auch die Bezeichnung "Statorzahn" bzw. "Rotorzahn" gewählt.

Die Speisung der Erregerwicklungen 1.3 erfolgt in hier nicht näher erläuterter Weise über eine elektronische Steuereinrichtung mit umlaufender Wicklungsbestromung und gegebenenfalls einer Taktung mit Pulsbreitenmodulation zur Vorgabe der Motorspannung mit Überwachung des Motorstromes.

FIG 2 bis 4 zeigen drei verschiedene Ausgestaltungen der erfindungsgemäß vorgesehenen Maßnahmen zur Geräuschminderung.

Gemäß FIG 2 sind in die Ausparungen 5 zwischen den Rotorpolen 2.1 Kunststoff-Ausfüllungen 3 eingespritzt bzw. eingesetzt, die aus Blöcken 3.1 ferromagnetischer Leitfähigkeit und aus Blöcken 3.2 ohne ferromagnetische Leitfähigkeit bestehen, derart daß mittig zwischen zwei benachbarten Rotorpolen 2.1 ein magnetischer Engpaß besteht, jedoch in den unmittelbaren tangentialen Nachbarbereichen der Polspitzen der Rotorpole 2.1 eine im Sinne einer Verminderung von durch Magnetostriktion bedingten Gerauschen vorteilhafte Verschleifung der Polspitzen entsteht.

Zur festigkeitserhöhenden formschlüssigen Verklammerung der Ausfüllungen mit den Rotorpolen 2.1 sind diese mit Krallen 2.15 versehen.

In fertigungstechnisch vorteilhafter Weise sind die Ausfüllungen bei der Ausgestaltung gemäß FIG 2 durch Kunststoffblöcke 3.1 gebildet, denen vorzugsweise kornförmiges ferromagnetisches Material beigemischt ist.

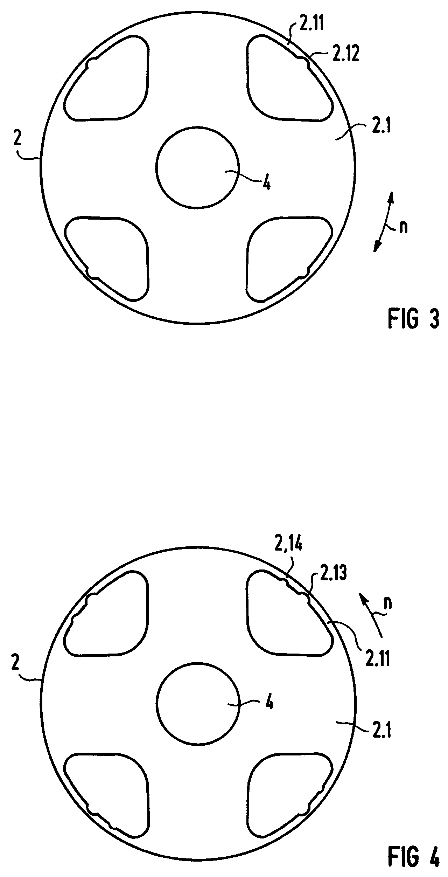

FIG 3,4 zeigen zwei Ausführungsbeispiele, bei denen zur erfindungsgemäßen Ausfüllung der AusSpannungen 5 umfangsrandseitig an die Polspitzen der Lamellen des Rotorblechpaketes 2 Lamellenstege 2.11 mitangestanzt sind. Zur Vermeidung von magnetischen Kurzschlüssen zwischen den benachbarten Rotorpolen 2.1 sind magnetische Engpässe in Form von Austanzungen 2.12 in FIG 3 bzw. 2.13, 2.14 gemäß FIG 4 vorgesehen; FIG 3 zeigt eine solche Engpaß-Anordnung mittig zwischen zwei benachbarten Rotorpolen 2.1 bei einem Motor, der in beiden Drehrichtungen n einsetzbar ist, und FIG 4 ein Rotorblechpaket 2 mit einem nur für eine Drehrichtung n vorgesehenen Motor, bei dem die magnetische Engstellen 2.13,2.14 in Drehrichtung n außermittig versetzt sind.

## Patentansprüche

1. Reluktanzmotor, insbesondere zum Antrieb eines Waschautomaten, mit über den Rotorumfang unter Bildung von Aussparungen (5) mit erhöhter Reluktanz verteilten Rotorpolen (2.1) geringerer Reluktanz, **dadurch gekennzeichnet,** daß die Aussparungen (5) zumindest rotorumfangsseitig mit einer Ausfüllung (2.11;3) mit im Sinne einer eine Geräuschbildung durch Turbulenzen verhindernden glatten Umfangsoberfläche bzw. mit im Sinne einer eine Geräuschbildung durch Magnetostriktion bzw. Momentenpulsation verhindernden magnetischen Leitfähigkeit bei betriebsmäßig relativ zum Stator (1) drehendem Rotor versehen sind.

2. Reluktanzmotor nach Anspruch 1, **gekennzeichnet durch** zumindest einen magnetischen Engpaß (2.12;2.13,2.14;3.2) zwischen den jeweils in Umfangsrichtung benachbarten, durch eine Ausfüllung (2.11;3) verbundenen Rotorpolen.

3. Reluktanzmotor nach Anspruch 2, **gekennzeichnet durch** einen Engpaß (2.12;3.2) in Umfangsrichtung mittig zwischen zwei benachbarten Rotorpolen (2.1). (FIG. 2,3)

4. Reluktanzmotor nach Anspruch 2, **gekennzeichnet durch** eine in Umfangsrichtung außermittig in Drehrichtung n verlagerten Enpaß (2.13;2.14). (FIG. 4)

5. Reluktanzmotor nach einem der Ansprüche 1 bis 4, **gekennzeichnet durch** eine Kunststoff-Ausfüllung mit einer Beimischung aus magnetisch leitendem Material. (FIG. 2)

6. Reluktanzmotor nach Anspruch 5, **gekennzeichnet durch** eine blockartig zusammengesetzte Ausfüllung (3) mit einerseits ferromagnetfreien Kunststoff-Blöcken (3.2) und mit andererseits ferromagnetischen Blöcken (3.1). (FIG.2)

7. Reluktanzmotor nach Anspruch 6, **gekennzeichnet durch** ferromagnetische Blöcke (3.1) in Form von Kunststoffblöcken mit einer Bemischung von ferromagnetischem, vorzugsweise kornförmigen Magnetmaterial. (FIG.2)

8. Reluktanzmotor nach zumindest einem der Ansprüche 1-7, **gekennzeichnet durch** eine formschlüssige Verankerung (Krallen 2.15) der Ausfüllungen (3.1) mit den benachbarten Polen (2). (FIG.2)

9. Reluktanzmotor nach einem der Ansprüche 1 bis 6, **gekennzeichnet durch** einstückige Rotorblechpaket-Lamellen mit Ausfüllungen zwischen den Polenden der Rotorpole (2.1) in Form von einstückig angestanzten außenrandseitigen Lamellenstegen (2.11).

10. Reluktanzmotor nach Anspruch 9, **gekennzeichnet durch** in die Lamellenstege (2.11) im Sinne eines magnetischen Engpasses eingestanzte Lücken (2.21;2.13,2.14). (FIG.3,4)
